# EUROPEAN PATENT SPECIFICATION

(11) **EP 0 543 529 B1**
(45) Date of publication and mention of the grant of the patent: **24.09.1997**
(21) Application number: 92310061.4
(22) Date of filing: 03.11.1992
(51) Int. Cl.: C10G 45/12

(54) **Hydrocarbon upgrading process**
Verfahren zum Aufbereiten von Kohlenwasserstoffen
Procédé d'amélioration d'hydrocarbures

(30) Priority: 19.11.1991 US 794273
(43) Date of publication of application: 26.05.1993
(73) Proprietor: MOBIL OIL CORPORATION, Fairfax, Virginia 22037-0001 (US)
(72) Inventor: Degnan, Thomas Francis, Moorestown, New Jersey 08057 (US); Shih, Stuart Shan-San, Cherry Hill, New Jersey 08003 (US)
(74) Representative: Kador & Partner

(56) References cited:
- EP-A- 0 271 264
- EP-A- 0 420 326
- GB-A- 2 249 554
- US-A- 5 059 304

## Description

This invention is directed to a process for upgrading of hydrocarbon streams and, more particularly, to a process for upgrading gasoline boiling range petroleum fractions containing substantial proportions of sulfur impurities.

It is well known in the petroleum refining field to catalytically crack heavy petroleum fractions, such as vacuum gas oil in order to convert a substantial proportion thereof to a wide range of petroleum fractions. It is conventional to recover the product of catalytic cracking and to distil, and thereby resolve, this product into various fractions such as light gases; naphtha, including light and heavy gasoline; distillate fractions, such as heating oil and Diesel fuel; lube oil base fractions; and heavier fractions.

Where the petroleum fraction being catalytically cracked contains sulfur, the products of catalytic cracking will also likely contain sulfur impurities. In particular, the heavy gasoline fraction is one portion of the product in which sulfur impurities tend to concentrate. It is therefore well known to subject this fraction to desulfurization processes. One conventional, commercially-practiced desulfurization process is hydrotreating, in which the heavy gasoline is contacted with a suitable hydrotreating catalyst at elevated temperature and somewhat elevated pressure in the presence of a hydrogen atmosphere. Typically, the hydrotreating catalyst is a combination of a Group VIII and a Group VI element, such as cobalt and molybdenum, on a suitable substrate, such as, for example, alumina.

It is also well known that naphthas, often light or full range naphthas, can be catalytically reformed, generally over a platinum type catalyst, so as to increase their octane number by converting at least a portion thereof to aromatics. Fractions to be catalytically reformed must also be desulfurized because the reforming catalyst is generally not sulfur tolerant. Thus, naphthas are usually pretreated to reduce their sulfur content before reforming. However, U.S. Patent 5,041,208 to Partridge et al. discloses the direct reforming and desulfurization of olefinic gasolines derived from catalytic cracking processes to provide a product of higher octane rating, using a large pore zeolite catalyst, e.g., zeolite Beta, which comprises noble metal.

Aromatics are generally the source of very high octane numbers, particularly very high research octane numbers. Therefore, while, on the one hand, they are quite desirable components of the gasoline pool, on the other hand, aromatics, and particularly benzene, have been the subject of severe limitations as a gasoline component because of their adverse effect upon the environment.

To the extent that it is possible, it has become desirable to create a gasoline pool in which the higher octanes are provided by olefinic and branched chain paraffinic components, rather than aromatic components. Light and full range naphthas can contribute substantial volume to the gasoline pool, but, without reforming, they do not have substantial octane to contribute.

Cracked naphtha, as it comes from the catalytic cracker and without any further treatments, such as purifying operations, has a relatively high octane number as a result of the presence of olefinic components. It also has an excellent volumetric yield. As such, cracked gasoline is an excellent contributor to the gasoline pool. It contributes a large quantity of product at a high blending octane number. In some cases, this fraction may contribute as much as up to half the gasoline in the refinery pool. Therefore, it is a desirable component of the gasoline pool.

Other highly unsaturated fractions boiling in the gasoline boiling range, which are produced in some refineries or petrochemical plants, include pyrolysis gasoline. This is a fraction which is often produced as a by-product in the cracking of petroleum fractions to produce light unsaturates, such as ethylene and propylene. Pyrolysis gasoline has a very high octane number but is quite unstable because, in addition to the desirable olefins boiling in the gasoline boiling range, it contains a substantial proportion of unstable diolefins.

Hydrotreating of any of the sulfur containing fractions which boil in the gasoline boiling range causes a reduction in the olefin content thereof, and therefore a reduction in the octane number. Moreover, as the degree of desulfurization increases, the octane number of the normally liquid gasoline boiling range product decreases. Some of the hydrogen may also cause hydrocracking as well as olefin saturation, depending on the conditions of the hydrotreating operation.

In any case, regardless of the mechanism by which it happens, the decrease in octane which takes place as a consequence of sulfur removal by hydrotreating creates a tension between the growing need to produce gasoline fuels with higher octane number, and because of current ecological considerations, the need to produce cleaner burning, less polluting fuels, especially low sulfur fuels. This tension is particularly pronounced in these days when the supply of hydrocarbons, particularly sweet hydrocarbons, is relatively short.

We have now devised a process for the treatment of sulfur containing gasoline boiling range fractions by which the sulfur content thereof is reduced to acceptable levels without substantial reduction in research octane number (RON) and volumetric yield. In favorable cases, the volumetric yield and/or the research octane number (RON) of gasoline boiling range product is actually increased.

Accordingly, the invention resides in a process for upgrading a sulfur containing feed fraction boiling in the gasoline boiling range which comprises contacting said feed fraction with a hydrotreating catalyst, which comprises a) the zeolite MCM-22, b) a Group VI metal, c) a Group VIII metal, and d) a refractory support, under hydrotreating conditions such as to produce a product comprising a normally liquid fraction which boils in substantially the same boiling range as the feed fraction, but which has a lower sulfur content than, and a research octane number (RON) no less than, 1 octane number below the feed fraction.

The present invention is particularly useful in that it carries out hydrodesulfurization without significantly reducing (even increasing, in some cases) the research octane number (RON) of the desulfurized product in a single stage, over a single catalyst. There is no need to remove substantially all sulfur and nitrogen from the reaction system before effecting octane-restoration (or octane increase) treatment.

The feed to the process of the invention is a sulfur-containing fraction which boils in the gasoline boiling range. Suitable feeds include a light naphtha having a boiling range of C₅ to 166°C (330°F), a full range naphtha having a boiling range of C₅ to 216°C (420°F), a heavier naphtha fraction boiling in the range of 127 to 211°C (260°F to 412°F), or a heavy gasoline fraction boiling at, or at least within, the range of 166 to 260°C (330 to 500°F), preferably 166 to 211°C (330 to 412°F). The most preferred feed appears at this time to be a heavy gasoline which has resulted from the catalytic cracking of a still heavier feed, such as a gas oil; or a light or full range gasoline boiling range fraction.

The catalyst employed in the process of the invention comprises: a) the zeolite MCM-22, b) a Group VI metal, usually molybdenum or tungsten, c) a Group VIII metal usually nickel or cobalt and d) a binder or substrate.
MCM-22 is described in U.S. 5,013,422.

The binder or substrate is suitably any refractory binder material. Examples of these materials are well known in the petroleum arts and include silica, silica-alumina, silica-zirconia, silica-titania, alumina, titanium dioxide, zirconium dioxide, and clays. Alumina is particularly preferred.

The catalyst employed in the present process should be selected to have sufficient acid activity to effect the partial cracking and rearrangement of the feed necessary to restore lost octane. However, it is undesirable for the catalyst to have too high an acid activity because this could severely reduce the volume of the gasoline boiling range product. One measure of the acid activity of a catalyst is its Alpha Value which is an approximate indication of the catalytic cracking activity of the catalyst compared to a standard catalyst and it gives the relative rate constant (rate of normal hexane conversion per volume of catalyst per unit time). It is based on the activity of a high-activity silica-alumina cracking catalyst taken as an Alpha of 1 (Rate Constant = 0.016 sec⁻¹). The Alpha Test is described in U.S. Patent 3,354,078; in the Journal of Catalysis, Vol. 4, p. 527 (1965); Vol. 6, p. 278 (1966); and Vol. 61, p. 395 (1980). The experimental conditions of the test used herein include a constant temperature of 538°C and a variable flow rate as described in detail in the Journal of Catalysis, Vol. 61, p. 395 (1980). Preferably, the catalyst of this invention has an alpha activity of at least 20, preferably 50 to 200.

The particle size and the nature of the catalyst will usually be determined by the type of conversion process which is being carried out, such as: a down-flow, liquid phase, fixed bed process; an up-flow, fixed bed, liquid phase process; an ebulating, fixed fluidized bed liquid or gas phase process; or a liquid or gas phase, transport, fluidized bed process. As noted above, all of these different process schemes are, per se, well known in the petroleum arts, and the choice of the particular mode of operation is a matter left to the discretion of the operator.

The conditions employed in the process of the invention generally include a temperature of 230 to 480°C (450 to 900°F), preferably 290 to 430°C (550 to 800°F); a pressure of 450 to 10400 kPa (50 to 1500 psig), preferably 2200 to 7000 kPa (300 to 1000 psig); a space velocity of 0.5 to 10 LHSV, preferably 1 to 6 LHSV; and a hydrogen to hydrocarbon ratio in the feed of 18 to 3600 Nm³/m³ (100 to 20,000 SCF/B), preferably 90 to 900 Nm³/m³ (500 to 5,000 SCF/B).

It is important that the conditions of operation and the catalysts which are chosen for use in this invention combine to produce a product slate in which the gasoline product octane is not substantially lower than the octane of the feed gasoline boiling range material; that is not lower by more than about 1 to 3 octane numbers. It is preferred that the catalysts and the operating conditions which are chosen for use in this invention are such that the volumetric yield of the product is not substantially diminished as compared to the feed. In some cases, the volumetric yield and/or octane of the gasoline boiling range product may well be higher than those of the feed. In many cases, the octane barrels (that is the research octane number (RON) of the product times the volume of product) of the product will be higher than the octane barrels of the feed.

It has been found that the research octane number (RON) of the product can be enhanced by operating at increased temperatures, that is greater than 340°C (650°F), preferably greater than 400°C (750°F).

The process of this invention is preferably operated under a combination of conditions such that the desulfurization is least about 50 %, preferably at least about 75 %, as compared to the sulfur content of the feed.

The single stage conversion of the present invention produces a product which can be separated into different fractions according to their boiling ranges and uses. The predominant fractions are: dry gas; LPG, that is C₃ and C₄ gases; and both heavy and light gasoline. The hydrogen sulfide and/or ammonia by-products can be separated for further processing as is usual in petroleum refining. Hydrogen sulfide can be converted to elemental sulfur via the Claus process. NH₃ can be recovered for fertilizer applications.

The invention will now be more particularly described with reference to the following Example and the accompanying drawings, in which
Figure 1 is a plot of gasoline sulfur content as a function of operating temperature for a process according to the Example of the present invention and for a process using a conventional, commercially available CoMo/Al₂O₃ catalyst, and
Figure 2 is a plot of Clear Research Octane as a function of operating temperature for the process of said Example of the present invention and for a process using a conventional CoMo/Al₂O₃ catalyst.

### EXAMPLE

In this Example, a CoMo/MCM-22/Al₂O₃ catalyst according to the present invention and a conventional, commercially available CoMo/Al₂O₃ hydrofinishing catalyst were used to hydrotreat a highly aromatic heavy cracked naphtha feed. The properties of the two catalysts are listed in Table 1 below:

**TABLE 1**

| **Catalyst Properties** | | |
|---|---|---|
| **Chemical Composition wt%** | **CoMo/MCM-22/Al**_{**2**}**O**_{**3**}^{**(1)**} | **CoMo/Al**_{**2**}**O**_{**3**} |
| Co | 2.0 | 3.4 |
| Mo | 9.8 | 10.2 |
| Physical Properties | | |
| Particle Density, g/cc | 0.919 | - |
| Surface Area, m²/g | 338 | 260 |
| Pore Volume, cc/g | 0.716 | 0.55 |
| Pore Diameter, A | 85 | 85 |

| | | |
|---|---|---|
| (1) contains 65 Wt% MCM-22 and 35% alumina | | |

Table 2 sets out the properties of a highly aromatic heavy cracked naphtha feed which was used in this Examples:

**TABLE 2**

| Heavy FCC Naphtha | |
|---|---|
| Gravity, °API | 23.5 |
| Hydrogen, wt% | 10.23 |
| Sulfur, wt% | 2.0 |
| Nitrogen, ppmw | 190 |
| Clear Research Octane, R+O | 95.6 |
| Composition, wt% | |
| Paraffins | 12.9 |
| Cyclo Paraffins | 8.1 |
| Olefins and Diolefins | 5.8 |
| Aromatics | 73.2 |
| Distillation, °F (°C) | |
| 5% | 289(143) |
| 10% | 355(179) |
| 30% | 405(207) |
| 50% | 435(224) |
| 70% | 455(235) |
| 90% | 482(250) |
| 95% | 488(253) |

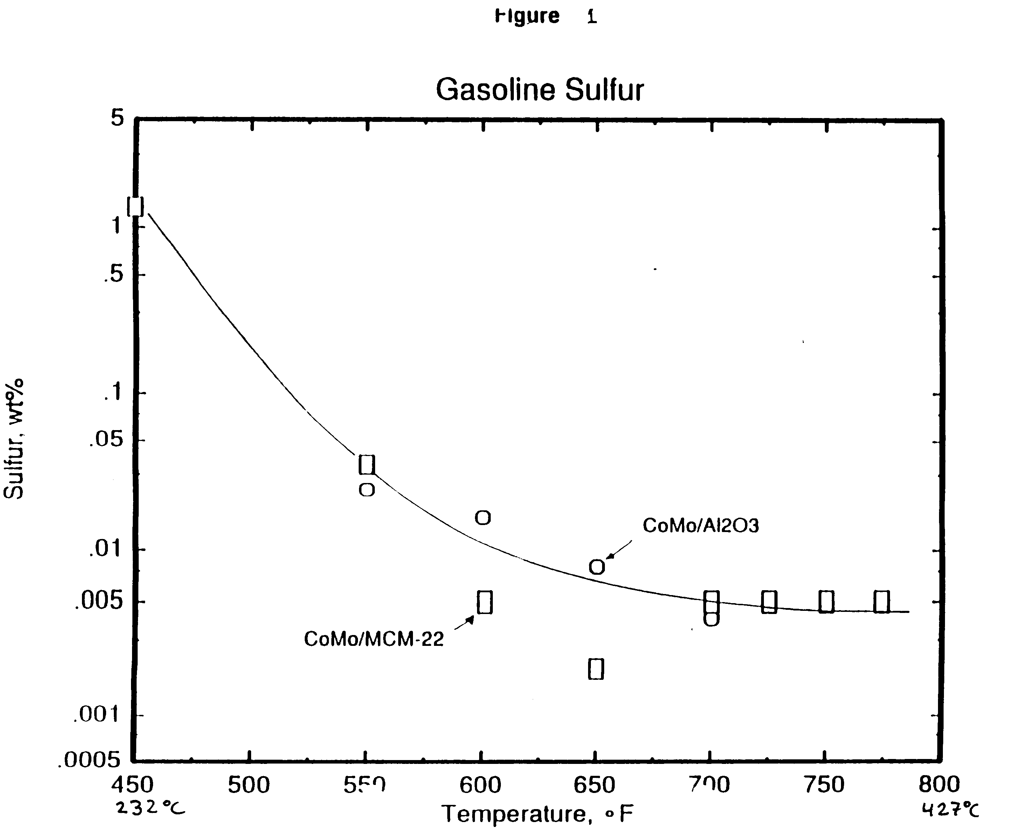

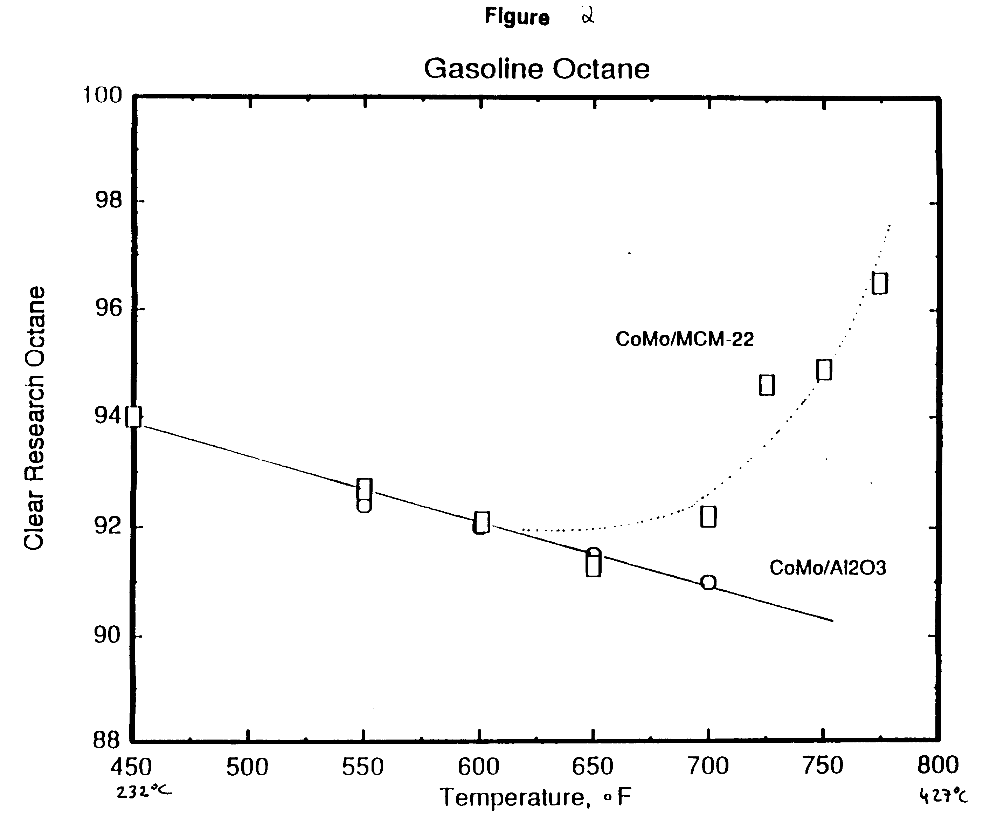

The finished CoMo/MCM-22/Al₂O₃ catalyst had a lower metal loading than the CoMo/Al₂O₃ catalyst. Both catalysts were presulfided and evaluated at the same conditions, 1.0 LHSV and 4240 kPa (600 psig) H₂, except for the hydrogen circulation rate, 180 Nm³/m³ (1000 scf/b) vs. 570 Nm³/m³ (3200 scf/b). Generally, higher hydrogen circulation rates and higher metal loadings provide better desulfurization activity. Reactor temperature was changed to obtain different operating severities. The results are shown in Figures 1 and 2.

As will be seen from Figure 1, the CoMo/MCM-22/Al₂O₃ catalyst, having lower metal loading and evaluated at lower hydrogen circulation rate, was at least as active as the CoMo/Al₂O₃ catalyst for desulfurization. More importantly, as shown in Figure 2, at high temperatures, e.g., above 343 °C (650°F), the octane of the desulfurized gasoline was higher than that of the conventional CoMo/Al₂O₃ catalyst. Above a reactor temperature of 400°C (750°F), the CoMo MCM-22/Al₂O₃ catalyst produced a low-sulfur gasoline with increased research octane number (RON), as compared to the 95.6 Research Clear Octane Number of the raw FCC heavy gasoline. At the same temperatures, the octane loss for the conventional CoMo/Al₂O₃ catalyst was more than 4 octane numbers (RON).

## Claims

1. A process for upgrading a sulfur containing feed fraction boiling in the gasoline boiling range which comprises contacting said feed fraction with a hydrotreating catalyst, which comprises a) the zeolite MCM-22, b) a Group VI metal, c) a Group VIII metal, and d) a refractory support, under hydrotreating conditions such as to produce a product comprising a normally liquid fraction which boils in substantially the same boiling range as the feed fraction, but which has a lower sulfur content than, and a research octane number (RON) no less than 1 octane number below the feed fraction.

2. The process as claimed in claim 1 wherein said feed fraction comprises a light naphtha fraction having a boiling range within the range C₅ to 166°C (330°F).

3. The process as claimed in claim 1 wherein said feed fraction comprises a full range naphtha fraction having a boiling range within the range of C₅ to 216°C (420°F).

4. The process as claimed in claim 1 wherein said feed fraction comprises a heavy naphtha fraction having a boiling range within the range 166 to 260°C (330 to 500°F).

5. The process as claimed in claim 1 wherein said feed fraction comprises a heavy naphtha fraction having a boiling range within the range 166 to 211°C (330 to 412°F).

6. The process as claimed in any preceding claim wherein said hydrotreating catalyst comprises cobalt and molybdenum.

7. The process as claimed in any preceding claim wherein said hydrotreating conditions comprise a temperature of 230 to 480°C (450 to 900°F), a pressure of 450 to 10400 kPa (50 to 1500 psig), a space velocity of 0.5 to 10 LHSV, and a hydrogen to hydrocarbon ratio in the feed of 18 to 3600 Nm³/m³ (100 to 20,000 SCF/B).

8. The process as claimed in any preceding claim wherein said hydrotreating conditions comprise a temperature 290 to 430°C (550 to 900°F), a pressure of 2200 to 7000 kPa (300 to 1000 psig); a space velocity 1 to 6 LHSV; and a hydrogen to hydrocarbon ratio in the feed of 90 to 900 Nm³/m³ (500 to 5,000 SCF/B).

## Patentansprüche

1. Verfahren zur Veredelung einer schwefelhaltigen, im Benzinsiedebereich siedenden Einsatzstoff-Fraktion, bei dem man die Einsatzstoff-Fraktion unter Hydrierbehandlungsbedingungen mit einem Hydrierbehandlungskatalysator, der a) den Zeolithen MCM-22, b) ein Metall der Gruppe VI, c) ein Metall der Gruppe VIII und d) einen feuerfesten Träger enthält, in Berührung bringt, wobei man ein Produkt erhält, das eine normalerweise flüssige Fraktion enthält, die im wesentlichen im gleichen Siedebereich wie die Einsatzstoff-Fraktion siedet, aber einen niedrigeren Schwefelgehalt und eine um mindestens 1 Octanzahleinheit niedrigere Research-Octanzahl (ROZ) als die Einsatzstoff-Fraktion aufweist.

2. Verfahren nach Anspruch 1, bei dem man als Einsatzstoff-Fraktion eine Leichtnaphtha-Fraktion mit einem Siedebereich im Bereich von C₅ bis 166°C (330°F) einsetzt.

3. Verfahren nach Anspruch 1, bei dem man als Einsatzstoff-Fraktion eine Vollnaphtha-Fraktion mit einem Siedebereich im Bereich von C₅ bis 216°C (420°F) einsetzt.

4. Verfahren nach Anspruch 1, bei dem man als Einsatzstoff-Fraktion eine Schwernaphtha-Fraktion mit einem Siedebereich im Bereich von 166 bis 260°C (330 bis 500°F) einsetzt.

5. Verfahren nach Anspruch 1, bei dem man als Einsatzstoff-Fraktion eine Schwernaphtha-Fraktion mit einem Siedebereich im Bereich von 166 bis 211°C (330 bis 412°F) einsetzt.

6. Verfahren nach einem der vorhergehenden Ansprüche, bei dem man einen Hydrierbehandlungskatalysator einsetzt, der Cobalt und Molybdän enthält.

7. Verfahren nach einem der vorhergehenden Ansprüche, bei dem man die Hydrierbehandlung bei einer Temperatur von 230 bis 480°C (450 bis 900°F), einem Druck von 450 bis 10400 kPa (50 bis 1500 psi Überdruck), einer Katalysatorbelastung von 0,5 bis 10 LHSV und einem Verhältnis von Wasserstoff zu Kohlenwasserstoff im Einsatzstoff von 18 bis 3600 Nm³/m³ (100 bis 20.000 SCF/B) durchführt.

8. Verfahren nach einem der vorhergehenden Ansprüche, bei dem man die Hydrierbehandlung bei einer Temperatur von 290 bis 430°C (550 bis 800°F), einem Druck von 2200 bis 7000 kPa (300 bis 1000 psi Überdruck), einer Katalysatorbelastung von 1 bis 6 LHSV und einem Verhältnis von Wasserstoff zu Kohlenwasserstoff im Einsatzstoff von 90 bis 900 Nm³/m³ (500 bis 5.000 SCF/B) durchführt.

## Revendications

1. Procédé d'amélioration d'une fraction introduite contenant du soufre, bouillant dans l'intervalle d'ébullition de l'essence, comprenant la mise en contact de ladite fraction introduite avec un catalyseur d'hydrotraitement, qui comprend a) le zéolite MCM-22, b) un métal du groupe VI, c) un métal du groupe VIII, et d) un support réfractaire, dans des conditions d'hydrotraitement telles que l'on produise un produit comprenant une fraction normalement liquide qui bout essentiellement dans le même intervalle que la fraction introduite, mais qui possède une teneur en soufre inférieure à la fraction introduite, et un indice d'octane théorique (RON) qui n'est pas inférieur de plus d'un indice d'octane à l'indice d'octane de la fraction introduite.

2. Procédé suivant la revendication 1, dans lequel ladite fraction introduite comprend une fraction naphte léger ayant un intervalle d'ébullition dans l'intervalle de C₅ à 166°C (330°F).

3. Procédé suivant la revendication 1, dans lequel ladite fraction introduite comprend une fraction naphte complète ayant un intervalle d'ébullition dans l'intervalle de C₅ à 216°C (420°F).

4. Procédé suivant la revendication 1, dans lequel ladite fraction introduite comprend une fraction naphte lourd ayant un intervalle d'ébullition dans l'intervalle de 166 à 260°C (330 à 500°F).

5. Procédé suivant la revendication 1, dans lequel ladite fraction introduite comprend une fraction naphte lourd ayant un intervalle d'ébullition dans l'intervalle de 166 à 211°C (330 à 412°F).

6. Procédé suivant l'une quelconque des revendications précédentes, dans lequel ledit catalyseur d'hydrotraitement comprend du cobalt et du molybdène.

7. Procédé suivant l'une quelconque des revendications précédentes, dans lequel lesdites conditions d'hydrotraitement comprennent une température de 230 à 480°C (450 à 900°F), une pression de 450 à 10 400 kPa (50 à 1500 psig), une vitesse spatiale de 0,5 à 10 VVH, et un rapport hydrogène sur hydrocarbure, dans la fraction introduite, de 18 à 3600 Nm³/m³ (100 à 20 000 pieds³/baril).

8. Procédé suivant l'une quelconque des revendications précédentes, dans lequel lesdites conditions d'hydrotraitement comprennent une température de 290 à 430°C (550 à 800°F), une pression de 2200 à 7000 kPa (300 à 1000 psig), une vitesse spatiale de 1 à 6 VVH, et un rapport hydrogène sur hydrocarbure, dans la fraction introduite, de 90 à 900 Nm³/m³ (500 à 5000 pieds³/baril).
